# EUROPEAN PATENT SPECIFICATION

(11) **EP 2 009 821 B1**
(45) Date of publication and mention of the grant of the patent: **02.11.2011**
(21) Application number: 07290802.3
(22) Date of filing: 28.06.2007
(51) Int. Cl.: H04J 3/06

(54) **Method of distributing a clock signal in a circuit emulation service network**
Verfahren zur Verteilung eines Uhrensignals in einem Schaltungsemulierungs-Dienstnetzwerk
Procédé de distribution d'un signal d'horloge dans un réseau de service d'émulation de circuit

(43) Date of publication of application: 31.12.2008
(73) Proprietor: Alcatel Lucent, 75008 Paris (FR)
(72) Inventor: Pascale, Emanuele Antonio, 54100 Massa (IT); Gerosa, Marzio, 20038 Seregno (IT); De Blasio, Giuseppe, 00135 Roma (IT)
(74) Representative: Nicolle, Olivier

(56) References cited:
- EP-A- 1 432 161
- US-A1- 2006 245 453
- US-B1- 6 765 863

## Description

### Technical field

The present invention relates to the field of communication networks. More particularly, the present invention relates to a method of distributing a clock signal in a circuit emulation service network. Further, the invention relates to a node configured to implement the method and to a circuit switch emulation network comprising such a node.

### Background art

In a circuit-switched communication network, such as for instance an SDH (Synchronous Digital Hierarchy) network, a PDH (Plesiochronous Digital Hierarchy) or a SONET network, information is carried by a flow of TDM (Time Division Multiplexing) frames organized according to a predefined hierarchy having a plurality of layers. Frames of a given layer are multiplexed according to the TDM technique, in order to form a higher layer frame.

Therefore, a proper operation of a circuit-switched synchronous network requires that synchronism of the TDM frames is kept while the TDM frames propagate across the network. To this purpose, each network node has to be able to recover a clock signal for processing TDM frames, which clock signal has to be compliant with a number of requirements. Typically, requirements on synchronization are expressed as maximum tolerated wander and maximum tolerated jitter. For instance, in SDH networks, the Recommendation ITU-T G.813 08/96, paragraphs 7.1 and 7.3, defines maximum wander and maximum jitter for a reference clock signal recovered by a slave node of a SDH network. In particular, maximum wander is 40 ns upon an observation time between 0.1 and 1 s, while the maximum jitter has a peak-to-peak amplitude of 0.50 UI in period of 60 s when filtered through a bandwidth between 20 Hz and 100 Hz, in case of SDH hierarchy optimized for a 2048 kbit/s rate.

Nowadays, solutions are known for transporting TDM frames also on packet-switched network. Packet-switched networks adapted to transport also TDM frames are generally termed Circuit Emulation Service networks (or, briefly, CES networks).

A CES network is typically provided with a number of interfaces for interfacing the CES network with a number of TDM terminals. Such TDM terminals may be for instance located at the customer premises. A first interface interfacing the CES network with the TDM terminal which generates the flow of TDM frames to be transmitted divides the flow of TDM frames in portions, it encapsulates each portion in a respective packet suitable to be transmitted along the CES network, and it transmits each packet along the CES network. Then, a second interface interfacing the CES network with the TDM terminal which is expected to receive the flow of TDM frames receives the packets, it extracts the portions of TDM frames from the received packets and it sorts the portions, thus recovering the flow of TDM frames.

Therefore, for ensuring that the flow of TDM frames can be properly recovered, the second interface should be able to recover the clock signal of the flow of TDM frames with an accuracy compliant with the above requirements.

Clock recovery may be implemented by a node of a CES network either according to an adaptive clock recovery technique or a differential clock recovery technique. In the latter case, each node of the CES network must be able to recover a clock delta relative to a reference clock signal Therefore, in this case all the nodes of a CES network have to receive a same reference clock signal.

US 2006/0245453 discloses a node of a packet-based (e.g. Ethernet) network, such as the network of central offices and base stations of a wireless telephone system, that receives one or more incoming packet-based signals from one or more other nodes of the network and recovers a clock signal from each incoming packet-based signal. The node selects one of the recovered clock signals as the node's reference clock signal.

US 6,765,863 discloses a network system composed of a master network synchronization device and a slave network synchronization device. A master network synchronization device transmits hop count information. A slave network synchronization device receives the hop count information from an adjoining network synchronization device, determines a minimum hop count between the device itself and the master network synchronization device based on the hop count information, transmits the minimum hop count as the hop count information, and extracts a clock from the route from which the minimum hop count is received.

### Summary of the invention

The invention addresses the problem of providing a method of distributing a clock signal to the nodes of a CES network, both in case of normal operation of the network and in case of fault, wherein the timing distribution has to be restored.

In the following description, the expression "master node" will designate the node of a CES network which is responsible of generating and distributing the reference clock signal. The other nodes, which receive the reference clock signal from the master node, will be termed "slave nodes".

In the following description, the term "locked mode" will designate a first mode according to which a slave node of a CES network may operate, wherein the slave node actually receives the reference clock signal from the master node. Similarly, the expression "free-run mode" will designate a second mode according to which a slave node of a CES network may operate wherein, for instance due to a fault in the CES network, the slave node does not receive the reference clock signal, and therefore it autonomously generates a local clock signal independent of the reference clock signal. The free-run mode is a temporary mode. Indeed, as soon as the fault is fixed, the slave node is brought back to the locked mode.

In the following description, the term "clock source node for a given slave node" will designate a node adjacent to the given slave node, from which the given slave node receives the TDM frames from which it recovers the clock signal.

Further, in the following description, the term "clock originating node for a given slave node" will indicate a node which is not necessarily adjacent to the given slave node and which generates the clock signal which the given slave node receives (possibly through other nodes). In case of proper operation of a CES network, the clock originating node for all the slave nodes of the CES network is the master node. On the other hand, slave nodes in free-run mode do not have any clock originating node.

According to a first aspect, the present invention provides a method of synchronizing a plurality of nodes in a circuit emulation service network, the plurality of nodes including a master node, a first node, a second node and a third node, the first node and the second node being adjacent to the third node. The method is **characterized in that** it comprises: a) transmitting from the first node to the third node a first synchronization message comprising a first information indicative of an origin of a first clock signal received by the first node, the first information indicating whether the first clock signal is generated by the master node or by a slave node in free-run mode; b) transmitting from the second node to the third node a second synchronization message comprising a second information indicative of an origin of a second clock signal received by the second node, the second information indicating whether the second clock signal is generated by the master node or by a slave node in free-run mode; c) processing the first information and the second information at the third node; d) selecting one of the first node and the second node as clock source node for the third node according to a result of the processing; and e) synchronizing the third node to the clock source node.

Profitably, in case the first information indicates that the first clock signal is generated by the master node and the second information indicates that the second clock signal is generated by the slave node in free-run mode, step d) comprises selecting the first node as clock source node.

Preferably, the first information further indicates whether the first clock signal is received by the first node from the third node or from a node other than the third node, and the second information further indicates whether the second clock signal is received by the second node from the third node or from a node other than the third node. Profitably, in case the first information indicates that the first clock signal is received by the first node from the third node and the second information indicates that the second clock signal is received by the second node from a node other than the third node, step d) comprises selecting the second node as clock source node. Alternatively, in case the first information indicates that the first clock signal is received by the first node from the third node and the second information indicates that the second clock signal is received by the second node from the third node, step d) comprises entering in free-run mode.

Preferably, the first information further indicates a first distance between the first node and a node generating the first clock signal, and the second information indicates a second distance between the second node and a node generating the second clock signal. Profitably, in case the first information and the second information indicate that the first clock signal and the second clock signal are generated by a same node, and in case the first distance is lower than the second distance, step d) comprises selecting the first node as clock source node.

Preferably, the first information further comprises a first node identifier and the second information further comprises a second node identifier. Profitably, in case the first information and the second information indicate that the first clock signal and the second clock signal are generated by a same node, and in case the first distance is equal to the second distance, step d) comprises selecting one of the first node and the second node as clock source node for the third node according to the first node identifier and the second node identifier.

According to preferred embodiments, steps a) and b) are performed periodically.

Preferably, the first synchronization message and the second synchronization message are included in frames of aggregate data flows which are transmitted from the first node and from the second node, respectively, to the third node. Profitably, the first information and the second information are inserted in the overhead of said frames.

According to a second aspect, the present invention provides a node of a circuit emulation service network comprising a plurality of nodes, the plurality of nodes including a master node, the node, a first node and a second node, the first node and the second node being adjacent to the node. The node is **characterized in that** it comprises: a) a receiver for receiving from the first node a first synchronization message comprising a first information indicative of an origin of a first clock signal received by the first node, the first information indicating whether the first clock signal is generated by the master node or by a slave node in free-run mode, and for receiving from the second node a second synchronization message comprising a second information indicative of an origin of a second clock signal received by the second node, the second information indicating whether the second clock signal is generated by the master node or by a slave node in free-run mode; b) a processor for processing the first information and the second information, and for selecting one of the first node and the second node as clock source node according to a result of the processing; and c) a clock recovery unit for synchronizing the node to the clock source node.

Advantageously, the node further comprises a transmitter for transmitting a third synchronization message to the first node and a fourth synchronization message to the second node, the third and fourth synchronization messages comprising a third information indicative of an origin of a third clock signal received by the node.

Profitably, in case the first information indicates that the first clock signal is generated by the master node and the second information indicates that the second clock signal is generated by the slave node in free-run mode, the processor is adapted to select the first node as clock source node.

Preferably, the receiver is further configured to receive the first synchronization message comprising the first information, whereby the first information further indicates whether the first clock signal is received by the first node from the third node or from a node other than the third node, and to receive the second synchronization message comprising the second information, whereby the second information further indicates whether the second clock signal is received by the second node from the third node or from a node other than the third node. Profitably, in case the first information indicates that the first clock signal is received by the first node from the third node and the second information indicates that the second clock signal is received by the second node from a node other than the third node, the processor is adapted to select the second node as clock source node. Alternatively, in case the first information indicates that the first clock signal is received by the first node from the third node and the second information indicates that the second clock signal is received by the second node from the third node, the processor is adapted to command to the node to enter in free-run mode.

Preferably, the receiver is further configured to receive the first synchronization message comprising the first information, whereby the first information further indicates a first distance between the first node and a node generating the first clock signal, and to receive the second synchronization message comprising the second information, whereby the second information indicates a second distance between the second node and a node generating the second clock signal. Profitably, in case the first information and the second information indicates that the first clock signal and the second clock signal are generated by a same node, and in case the first distance is lower than the second distance, the processor is adapted to select the first node as clock source node.

Preferably, the receiver is further configured to receive the first synchronization message comprising the first information, whereby the first information further comprises a first node identifier and to receive the second synchronization message comprising the second information, whereby the second information further comprises a second node identifier. Profitably, in case the first information and the second information indicate that the first clock signal and the second clock signal are generated by a same node, and in case the first distance is equal to the second distance, the processor is adapted to select one of the first node and the second node as clock source node for the third node according to the first node identifier and the second node identifier.

According to a third aspect, the present invention provides a circuit emulation service network comprising a plurality of nodes, **characterized in that** the plurality of nodes includes at least a first node, a second node and a third node as set forth above.

According to a fourth aspect, the present invention provides a computer program comprising computer program code means running on a node of a circuit emulation service network comprising a plurality of nodes, the plurality of nodes including a master node, the node, a first node and a second node, the first node and the second node being adjacent to the node. The computer program is adapted to: receive as a first input a first synchronization message comprising a first information indicative of an origin of a first clock signal received by the first node, the first information indicating whether the first clock signal is generated by the master node or by a slave node in free-run mode; receive as a second input a second synchronization message comprising a second information indicative of an origin of a second clock signal received by the second node, the second information indicating whether the second clock signal is generated by the master node or by a slave node in free-run mode; processing the first information and the second information; and selecting one of the first node and the second node as clock source node for the node according to a result of the processing.

According to a fifth aspect, the present invention provides computer readable medium included in a node of a circuit emulation service network, **characterized in that** the computer readable medium has recorded thereon a computer program as set forth above.

### Brief description of the drawings

The present invention will become clearer by reading the following detailed description, given by way of example and not of limitation, to be read by referring to the accompanying drawings, wherein:
- Figures 1a, 1b schematically show the operation of an exemplary CES network with a non-meshed structure, in case of normal operation and in case of a fault, respectively;
- Figures 2a and 2b schematically shows the structure of a synchronization message sent by a first node to a second node, according to an embodiment of the present invention;
- Figure 3 schematically shows a node receiving a number of synchronization messages, according to an embodiment of the present invention;
- Figures 4a and 4b schematically show the operation of an exemplary meshed CES network, in case of normal operation and in case of a fault on a link between to slave nodes, respectively;
- Figures 5a, 5b, 5c, 5d show successive steps of the operation of a first exemplary CES meshed network, in case a fault occurs at the master node; and
- Figures 6a, 6b, 6c, 6d show successive steps of the operation of a second exemplary meshed network, in case a fault occurs at the master node.

### Detailed description of referred embodiments of the invention

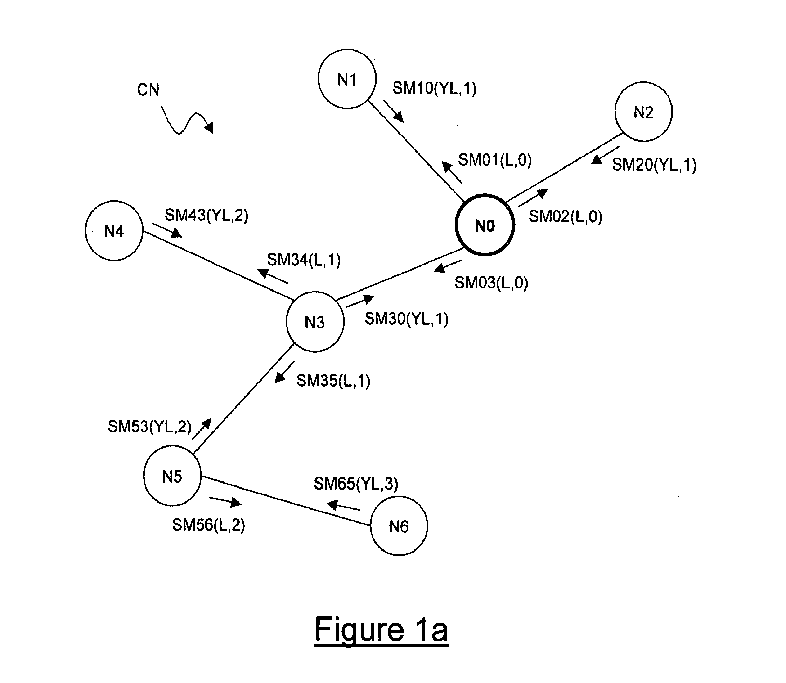

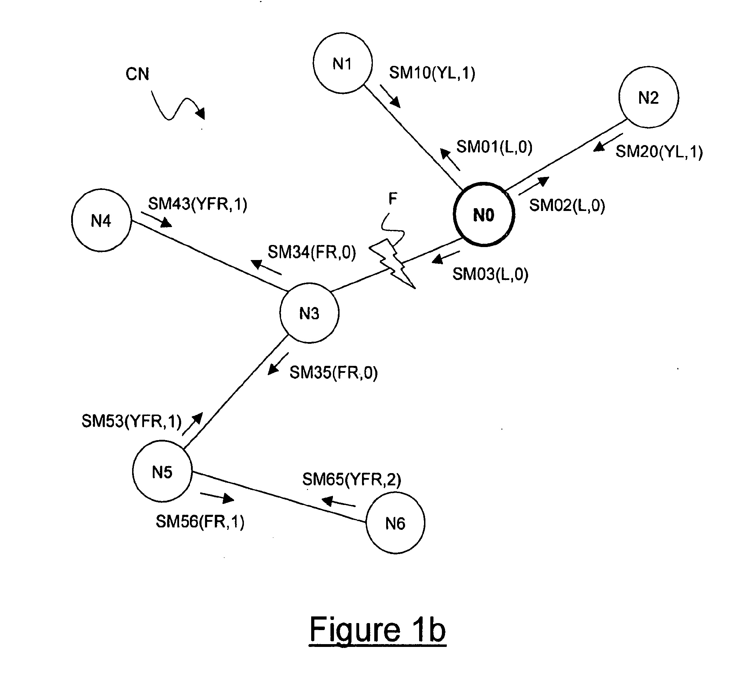

Figures 1a and 1b schematically show an exemplary CES network CN, which is adapted to implement the method according to an embodiment of the present invention. The CES network CN may be for instance a wireless CES network or a wired CES network.

The network CN comprises seven nodes N0, N1, N2, N3, N4, N5, N6. This is only exemplary, since the network CN could comprise any number of nodes. The nodes are arranged according to a non-meshed structure. In particular, the node N0 is connected to nodes N1, N2, N3. The node N3 is connected to nodes N4, N5 and N0. The node N5 is connected to nodes N3 and N6. The nodes N0 to N6 exchange TDM frames, which are not shown in Figures 1a and 1b for simplicity.

It is assumed that the master node of the network CN is the node N0. This is only exemplary, since any node of the network CN could be the master node.

According to the present invention, a node (either a master node or a slave node) of a CES network is adapted to transmit to each adjacent node a respective synchronization message. Each synchronization message advantageously comprises information indicative of the clock source node, the clock originating node, and the distance between the node and the clock originating node.

Further, according to the present invention, each node of a CES network is adapted to process information comprised in each synchronization message received from each adjacent node, and to chose its clock source node according to results of such a processing.

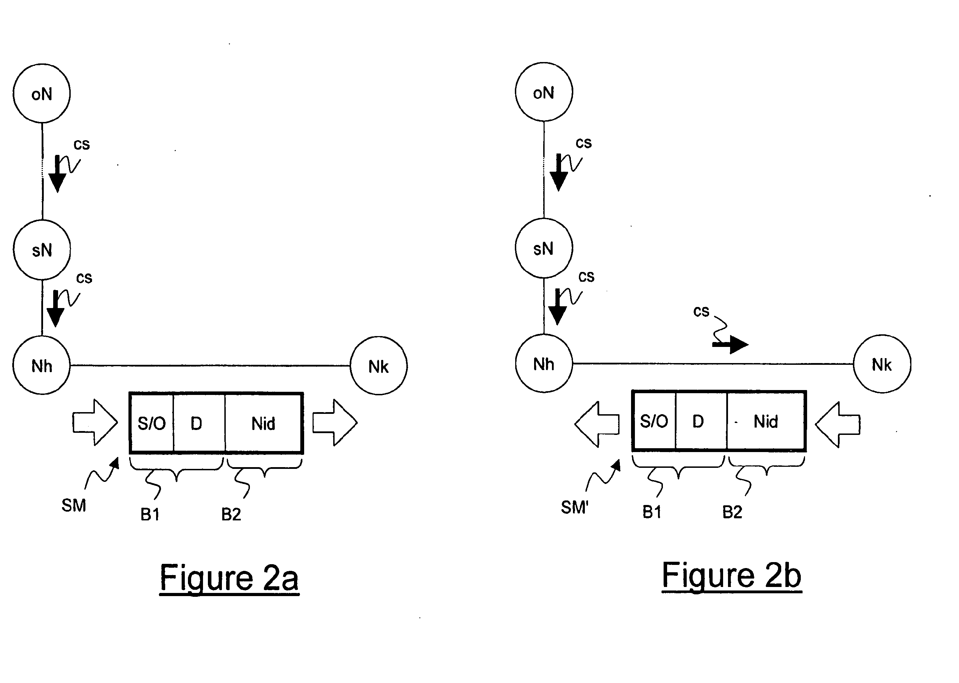

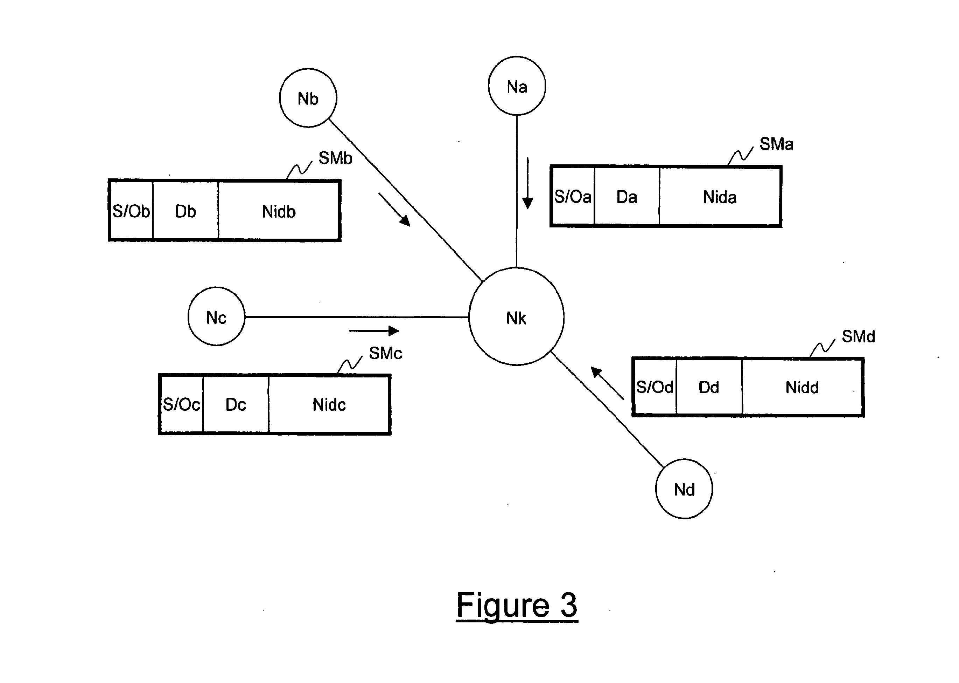

In the following, by referring to Figures 2a and 2b, the content of a synchronization message according to preferred embodiments of the present invention will be described. Subsequently, by referring to Figure 3, an exemplary processing performed by a node on received synchronization messages will be described.

Figures 2a and 2b schematically show four nodes oN, sN, Nh and Nk of a CES network. The nodes sN, Nh and Nk are adjacent nodes. The node oN transmits a clock signal (possibly through other nodes which are not shown in Figure 2) to the node sN, which then forwards it to the node Nh. Therefore, the node oN is the clock originating node for sN and Nh, and sN is the clock source node for Nh.

According to the present invention, the node Nh sends a synchronization message SM to the node Nk. The synchronization message SM preferably comprises:
- a clock source/origin information S/O, indicating the clock source node of the node Nh (i.e., the node sN) and the clock originating node of the node Nh (i.e., the node oN); and
- a distance information D, indicating a distance (e.g. expressed as a number of spans) between the node Nh and its clock originating node oN.

In the following description and in the claims, the term "span" will designate a link between two adjacent nodes.

Preferably, the clock source/origin information S/O of the synchronization message SM may have two different values. A first value, for instance equal to "L", indicates that the clock originating node oN for the node Nh is the master node, while a second value, for instance equal to "FR", indicates either that the node Nh is in free-run mode or that the clock originating node oN is a slave node in free-run mode.

It is assumed that, after processing the synchronization message SM as it will be described herein after by referring to Figure 3, the node Nk chooses the node Nh as its clock source node, thus receiving the clock signal cs originated by the clock originating node oN from the node Nh.

According to the present invention, the node Nk also sends a synchronization message SM' to the node Nh. Also the synchronization message SM' comprises:
- a clock source/origin information S/O, indicating the clock source node of the node Nk (i.e. the node Nh) and the clock originating node of the node Nk (i.e., the node oN); and
- a distance information D, indicating a distance (e.g. expressed as a number of spans) between the node Nh and its clock originating node oN.

Preferably, the clock source/origin information S/O of the synchronization message SM' may have two different values. A third value, for instance equal to "YL", indicates that the clock source node sN of the node Nk is the node Nh itself, and that the clock originating node oN is the master node, while a fourth value, for instance equal to "YFR", indicates that the clock source node sN of the node Nk is the node Nh itself, and that the clock originating node oN is a slave node in free-run mode.

Optionally, as shown in Figures 2a and 2b, a synchronization message SM, SM' may also comprise a node identifier Nid. Preferably, in case the clock originating node oN is the master node (i.e. the information S/O is equal to "L" or "LY"), the node identifier Nid is the identifier of the node that sent the synchronization message. On the other hand, in case the clock originating node oN is a slave node in free-run mode, the node identifier Nid is preferably the identifier of the slave node in free-run mode.

Preferably, the synchronization message SM, SM' is periodically transmitted, with a certain repetition period. For instance, the synchronization message SM, SM' may be inserted in each frame (namely, in the frame header) of an aggregated data flow transmitted by network nodes.

In this case, preferably, the synchronization message SM, SM' comprises a string of two bytes B1, B2, which are shown in Figures 2a, 2b. Preferably, the first two bits of the first byte B1 are used for representing the clock source/origin information S/O. For instance, the value "L" may be represented as "00", the value "FR" may be represented by "01", the value "YL" may be represented by "10" and the value "YFR" may be represented by "11". Preferably, the last six bits of the first byte B1 are used for representing the distance information D. Therefore, the distance between the node transmitting the synchronization message and the clock originating node may be comprised between 0 (000000) and 63 (111111). The second byte B2 may be used for representing the node identifier Nid.

Therefore, nodes Nh transmitting synchronization messages SM wherein the first byte B1 has values between 0 (00000000) and 63 (00111111) are nodes Nh whose clock originating node oN is the master node, and whose distance from the clock originating node oN is comprised between 0 and 63 spans. Similarly, nodes Nh transmitting synchronization messages SM wherein the first byte B1 has values between 64 (01000000) and 127 (01111111) are nodes whose clock originating node oN is a slave node in free-run mode, and whose distance from the clock originating node is comprised between 0 and 63 spans. Similarly, nodes Nk transmitting synchronization message SM' wherein the first byte B1 has value between 128 (10000000) and 191 (10111111) are nodes Nk whose clock source node is the node Nh receiving the synchronization message SM', whose clock originating node oN is the master node, and whose distance from the clock originating node oN is comprised between 0 and 63 spans. Finally, nodes Nk transmitting synchronization message SM' wherein the first byte B1 has value between 192 (11000000) and 255 (11111111) are nodes Nk whose clock source node is the node Nh receiving the synchronization message SM', whose clock originating node oN is slave node in free-run mode, and whose distance from the clock originating node is comprised between 0 and 63 spans.

By referring to Figure 3, an exemplary processing of synchronization messages received by a node according to an embodiment of the present invention will be described.

Figure 3 shows a node Nk, which can be any one of the nodes of the CES network CN of Figures 1a and 1b. The node Nk is adjacent to a number n of nodes. By way of example, in Figure 3 it is assumed that the number n is equal to four. The four nodes are indicated in Figure 3 as Na, Na, Nc, Nd. From each adjacent node Na, Nb, Nc, Nd, the node Nk receives a respective synchronization message SMa, SMb, SMc, SMd. Similarly to what shown in Figures 2a, 2b, each synchronization message SMa, SMb, SMc, SMd comprises a respective information S/Oa, S/Ob, S/Oc, S/Od, a respective information Da, Db, Dc, Dd, and a respective node identifier Nida, Nidb, Nidc, Nidd. By way of example, it is assumed that the synchronization messages SMa, SMb, SMc, SMd comprise:
- SMa: S/Oa="FR", Da=4;
- SMb: S/Ob="L", Db=1;
- SMc: S/Oc="L", Dc=5; and
- SMd: S/Od="YL", Dd=3.

Therefore, SMa indicates that Na has a slave node in free-run mode as clock originating node, and that its distance from this slave node in free-run mode is four spans. Similarly, SMb indicates that Nb has the master node as clock originating node, and that its distance from the master node is one span. Similarly, SMc indicates that Nc has the master node as clock originating node, and that its distance from the master node is five spans. Finally, SMd indicates that Nd has the master node as clock originating node, as clock source node the node Nk itself, and that its distance from the master node is three spans.

The node Nk, by receiving these synchronization messages, processes them and it selects its clock source node according to results of such a processing. According to preferred embodiments of the present invention, for selecting its clock source node, the node Nk preferably applies at least one of the following criteria.

According to a first criterion, the node Nk will not select as clock source node a node from which it receives a synchronization message whose information S/O is equal to "YL" (as the node Nd, in the example of Figure 3) or "YFR". This criterion advantageously allows to prevents synchronization loops in the network, since a node Nk does not select as clock source node a node for which it is acting as clock source node.

According to a second criterion, in case at least one of the synchronization messages received by the node Nk has information S/O with value "L" (such as the messages SMb, SMc in the example of Figure 3), all the synchronization messages received by the node Nk whose information S/O have values different from "L" are disregarded. In other words, in case at least one of the nodes adjacent to the node Nk is in locked mode, the node Nk advantageously selects as clock source node this locked node. Therefore, advantageously, possible clock signals generated by slave nodes in free-run mode and reaching the node Nk are ignored by the node Nk, if a clock signal originated by the master node is available at Nk. This situation may occur when, due to a fault, part of the nodes of a network enter in free-run mode, while the remaining nodes still receive the reference clock signal from the master node, and therefore they are still in locked mode. In this case, if the node Nk receives both the reference clock signal from a locked node and one or more local clock signals from one or more free-run nodes, the node Nk preferably selects as clock source node the locked node.

According to a third criterion, if a node Nk receives more than one synchronization message with information S/O equal to "L" and with information D with different values, the node Nk preferably selects as clock source node the node from which it receives the synchronization message with information D having the minimum value. In other words, if the node Nk receives the clock signals from different adjacent locked nodes, it preferably selects as clock source node the adjacent locked node which is the nearest to the master node. This advantageously allows the node Nk to select the clock signal having the best available quality.

Therefore, in the example of Figure 3, application of the above criteria implies that the node Nk selects as clock source node the node Nb, which is a locked node, and which is the nearest to the master node.

According to a fourth criterion, which is not shown in Figure 3, in case the information S/O of different synchronization messages are equal to "L", and their information D have a same value, the node Nk preferably selects its clock source node according to the node identifiers comprised in the different synchronization messages.

The method according to the present invention has several advantages.

Indeed, by using synchronization messages, each node has information allowing it to select autonomously its clock source node. Advantageously, this allows to dynamically adapt the clock distribution scheme in a CES network according to operation conditions of the network. Indeed, in case of a fault or in case of a topology change in a network, each node is able to dynamically change its clock source node, according to the new synchronization messages received from adjacent nodes after the fault or topology change has occurred.

Further, each node is advantageously able to autonomously select the best quality clock signal among the clock signals it receives from adjacent nodes, thus implying an overall improvement of the CES network performance.

By referring to Figures 1a and 1b, a first example of the method according to an embodiment of the invention will be described, in case of the non-meshed CES network CN. For clarity reasons, in Figures 1a, 1b each synchronization message is followed by the values of its clock source/origin information S/O and its destination information D, enclosed between parenthesis.

In case of normal operation of the network (see Figure 1a), the master node N0 sends respective synchronization messages SM01(L,0), SM02(L,0), SM03(L,0) to the nodes N1, N2, N3 informing them that N0 is the master node of the network CN. Upon reception of synchronization messages SM01(L,0), SM02(L,0), SM03(L,0) from the node N0, the nodes N1, N2, N3 reply to the master node N0 with respective synchronization messages S10(YL,1), S20(YL,1), S30(YL,1) informing N0 that N1, N2, N3 are synchronized to N0 (i.e. they selected N0 as clock source signal). Further, the N3 sends to N4, N5 respective synchronization messages SM34(L,1), SM35(L,1) informing N4, N4 that N3 is in locked mode (i.e. its clock originating node is the master node) and that its distance from N0 is equal to one span. The nodes N4, N5 reply to N3 with respective synchronization messages S43(YL,2), S53(YL,2) informing N3 that N4, N5 are synchronized to N3 (i.e. they both selected N3 as clock source signal). Further, the N5 transmits to N6 a synchronization message SM56(L,2) informing N6 that N5 is in locked mode and that its distance from N0 is equal to 2 spans. Finally, N6 reply to N5 with a synchronization message S65(YL,3) informing N5 that N6 is synchronized to N5.

By referring now to Figure 1b, it is assumed that a fault F occurs in the network CN on the link connecting nodes N0 and N3.

Upstream the fault F, the network CN still operates as shown in Figure 1a. Downstream the fault F, on the contrary, the node N3 does not receive any signal from the master node N0 any more. Therefore, as soon as N3 realizes that it does not receive any signal from N0, it processes the synchronization messages received from N4, N5, and it realizes that such nodes N4, N5 are synchronized to it. Therefore, it realizes that it can not use one of nodes N4, N5 as clock source node, since this would induce a loop. Therefore, N3 enters in free-run mode, and it sends to N4, N5 respective synchronization messages SM34(FR,0), SM35(FR,0) informing N4 and N5 that now N3 is in free-run mode. Upon reception of synchronization messages SM34(FR,0), SM35(FR,0) from node N3, the nodes N4, N5 send to N3 respective synchronization messages S43(YFR,1), S53(YFR,1) informing N3 that N4, N5 are aware that the N3 is now in free-run mode, and that they keep on being synchronized to N3. Further, upon reception of the synchronization message SM35(FR,0) from N3, the node N5 sends to N6 a synchronization message SM56(FR,1) informing N6 that now its clock source node is no more a locked node, but a free-run node (N3) from which it has a distance of one span. Upon reception of the synchronization message SM56(FR,1) from N5, the node N6 replies with a synchronization message S65(YFR,2) informing N5 that N6 is aware that the clock originating node is no more the master node N0, and that it keeps on being synchronized to N5.

Therefore, thanks to synchronization messages, each node is aware of the synchronization status (locked or free-run) of each adjacent node and of possible changes of such synchronization status, thus being able to select its clock source node between its adjacent nodes in such a way to avoid loops and to always choose the best available clock signal.

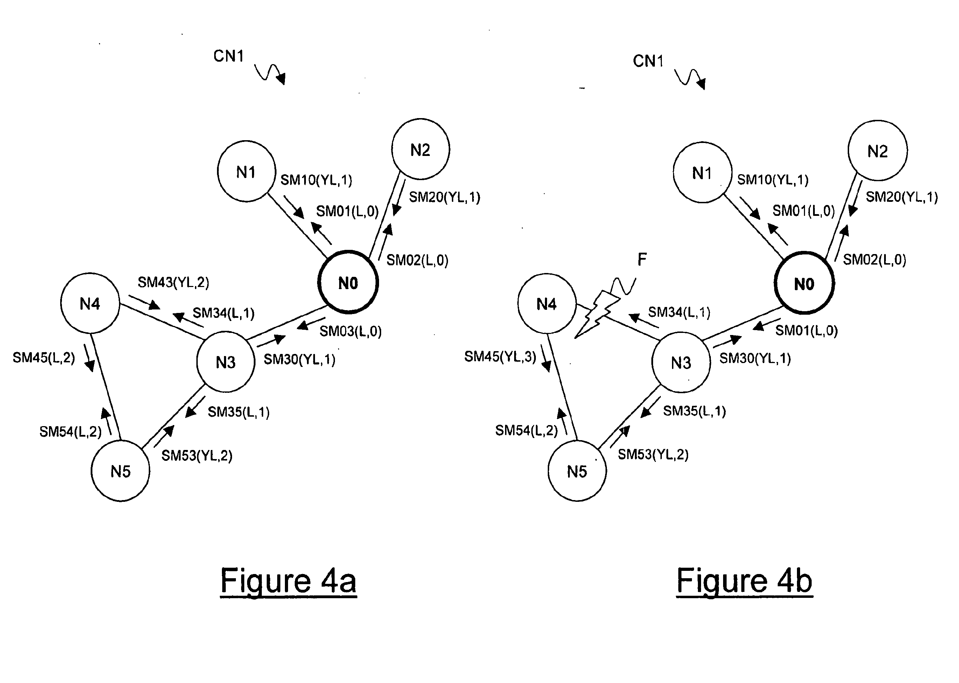

This is particularly advantageous is case of a meshed network, as will be described hereinafter by referring to Figures 4a and 4b.

Figures 4a and 4b schematically show an exemplary meshed network CN1, which is adapted to implement the method according to an embodiment of the present invention.

The network CN1 comprises six nodes N0, N1, N2, N3, N4, N5. This is only exemplary, since the network CN1 could comprise any number of nodes. The nodes of the network CN1 are arranged according to a partially meshed structure. In particular, the node N0 is connected to nodes N1, N2, N3. The node N3 is in turn connected to nodes N4, N5 (and NO). Nodes N4 and N5 are connected each other. The nodes of the network CN1 exchange TDM frames, which are not shown in Figures 4a, 4b for simplicity.

By way of example, it is assumed that the master node of the network CN1 is the node N0. For clarity reasons, in Figures 4a, 4b each synchronization message is followed by the values of its clock source/origin information S/O and its destination information D, enclosed between parentheses.

In case of normal operation of the network (see Figure 4a), the master node N0 sends respective synchronization messages SM01(L,0), SM02(L,0), SM03(L,0) to N1, N2, N3, for informing them that N0 is the master node of the network CN. Upon reception of synchronization messages SM01(L,0), SM02(L,0), SM03(L,0) from N0, the nodes N1, N2, N3 reply to N0 with respective synchronization messages S10(YL,1), S20(YL,1), S30(YL,1) informing N0 that N1, N2, N3 are synchronized to it. Further, N3 sends to N4, N5 respective synchronization messages SM34(L,1), SM35(L,1) informing N4, N5 that N3 is locked mode and that its distance from N0 is equal to one span. The nodes N4, N5 reply to N3 with respective synchronization messages S43(YL,2), S53(YL,2) informing N3 that N4 and N5 are synchronized to it (i.e. they both selected N3 as clock source signal). Finally, N4 sends a synchronization message SM45(L,2) to N5, and also N5 sends a synchronization message SM54(L,2) to N4. This is due to the fact that both N4 and N5 have N3 as clock source node, and they both have a distance of two spans from N0. Therefore, each node N4, N5 receives a first synchronization message SM34(L,1), SM35(L,1) from N3 and a second synchronization message SM54(L,2), SM45(L,2) from N5, N4 respectively. The two synchronization messages received by each node have information S/O equal to "L" and information D with different values. Therefore, by applying the above cited criteria, each node N4, N5 selects as clock source node the node having the minimum distance from the clock originating node, i.e. N3.

By referring now to Figure 4b, it is assumed that a fault F occurs in the network CN1 on the link connecting N3 and N4.

Upstream the fault F, the network CN1 still operates as shown in Figure 4a. Therefore, the node N3 is still in locked mode, and it still acts as clock source node for N5. However, N3 can not act as clock source node for N4 any more. On the other hand, since the node N5 keeps on receiving the synchronization message SM54(L,2) from N5, it selects N5 as clock source node, and therefore it starts replying to N5 with a synchronization message SM45(YL,3). Therefore, the node N5 is informed that N4 is now synchronized to it and therefore, in case the node N5 looses synchronization to the master node N0, N5 will have to avoid selecting N4 as clock source node, in order to prevent loops.

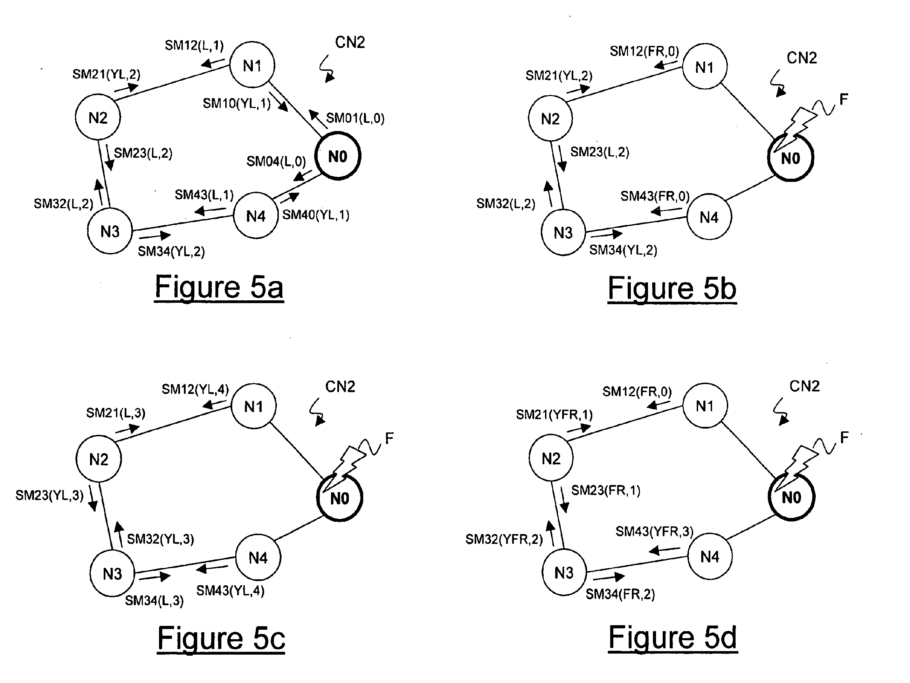

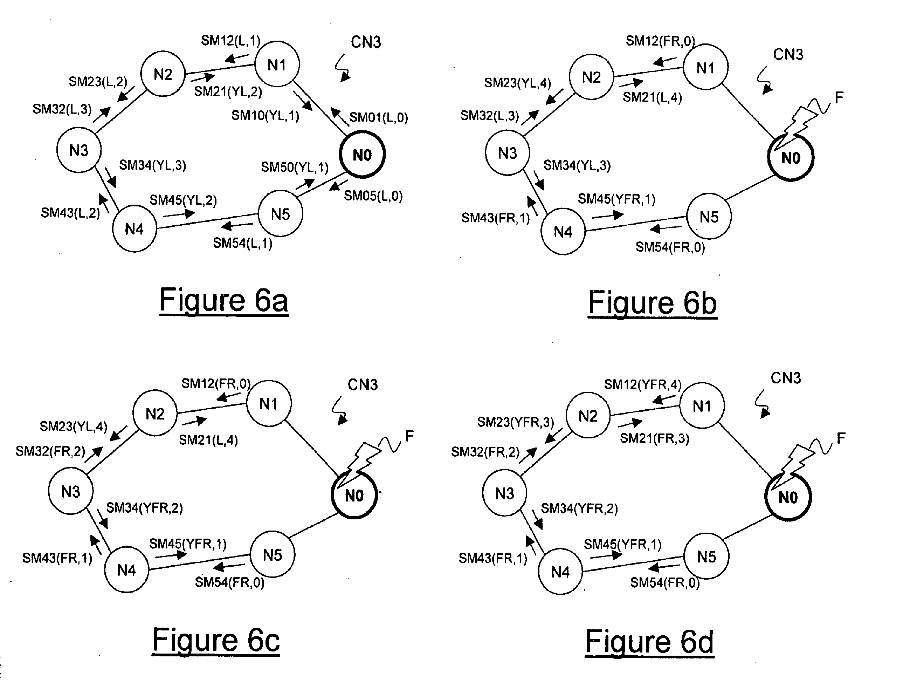

Figures 5a-5d and Figures 6a-6d show further examples or meshed CES network for implementing the method according to embodiments of the present invention, in case a fault occurs at the master node.

Figure 5a-5b show a network CN2 having five nodes N0, N1, N2, N3, N4. The nodes are connected according to a ring structure. By way of example, it is assumed that the master node is N0. The nodes of CN2 exchange flows of TDM frames, which are not shown in the Figures 5a-5b for simplicity.

In case of normal operation of the network (see Figure 5a), the master node N0 sends respective synchronization messages SM01(L,0), SM04(L,0) to the nodes N1, N4, respectively, for informing them that it is the master node. The nodes N1, N4 reply with respective synchronization messages SM10(YL,1), SM40(YL,1) informing N0 that they are synchronized to it. Then, N1 sends a synchronization message SM12(L,1) to N2 for informing N2 that it is in locked mode, and that its distance from the master node is equal to one span. Similarly, N4 sends a synchronization message SM43(L,1) to N3 for informing N3 that it is in locked mode, and that its distance from the master node is equal to one span.

The node N2 replies to N1 with a synchronization message SM21(YL,2) informing N1 that N2 is synchronized to it. Similarly, the node N3 replies to N4 with a synchronization message SM34(YL,2) informing N4 that N3 is synchronized to it.

Further, the node N2 sends a synchronization message SM23(L,2) to N3 informing N3 that N2 is in locked mode and that N2 has a distance of two spans from the master node N0. Similarly, the node N3 sends a synchronization message SM32(L,2) to N2 informing N2 that N3 is in locked mode and that N3 has a distance of two spans from the master node N0. Therefore, each of nodes N2, N3 receives a first synchronization message SM12(L,1), SM43(L,1) from N1, N4, respectively, and a second synchronization message SM32(L,2), SM23(L,2) from N3, N2 respectively. Such message comprise distance information D with different values. Therefore, by applying the above described criteria, each node N2, N3 selects as clock source node the node having the minimum distance from the master node, i.e. N2 selects N1 as clock source node and N3 selects N4 as clock source node.

It is now assumed that a fault F occurs at the master node N0. By referring to Figure 5b, as soon as the node N1 realizes that it is not receiving any signal from the master node N0, it processes the synchronization message SM21(YL,2) received from N2, and it realizes that N2 is synchronized to it. Therefore, for avoiding loops, the node N1 enters in free-run mode and it sends to the node N2 a synchronization message SM12(FR,0) informing N2 that N1 is now in free-run mode. Similarly, as soon as the node N4 realizes that it is not receiving any signal from the master node N0, it processes the synchronization message SM34(YL,2) received from N3, and it realizes that N3 is synchronized to it. Therefore, for avoiding loops, the node N4 enters in free-run mode and it sends to the node N3 a synchronization message SM43 (FR,0) informing N3 that N4 is now in free-run mode. This situation is shown in Figure 5b.

Then, since N2 receives a synchronization message SM12(FR,0) with information S/O equal to "FR" from N1 and a synchronization message SM32(L,2) with information S/O equal to "L" from N3, it processes these two synchronization messages, and by applying the above criteria, it selects N3 as its clock source node. Similarly, since N3 receives a synchronization message SM43(FR,0) with information S/O equal to "FR" from N1 and a synchronization message SM23(L,2) with information S/O equal to "L" from N2, it processes these two synchronization messages, and by applying the above criteria, it selects N2 as its clock source node.

Therefore, as shown in Figure 5c, the node N2 replies to N3 with a synchronization message SM23(YL,3) informing N3 that N2 is synchronized to N3. Further, N2 sends to N1 a synchronization message SM21(L,3) informing N1 that N2 apparently is in locked mode and that its distance from the master node N0 is of three spans. Similarly, the node N3 replies to N2 with a synchronization message SM32(YL,3) informing N2 that N3 is synchronized to N2. Further, N3 sends to N4 a synchronization message SM34(L,3) informing N4 that N3 apparently is in locked mode and that its distance from the master node N0 is of three spans.

Therefore, as shown in Figure 5c, since N1 is in free-run mode and it receives from N2 a synchronization message informing N1 that N2 is in locked mode, N1 exits the free-run mode, it gets synchronized to N2, and it sends to N2 a synchronization message SM12(YL,4) informing N2 that N1 is now synchronized to it. Similarly, since N4 is in free-run mode and it receives from N3 a synchronization message informing N4 that N3 is in locked mode, N4 exits the free-run mode, it gets synchronized to N3, and it sends to N3 a synchronization message SM43(YL,4) informing N3 that N4 is now synchronized to it.

Therefore, N2 processes the synchronization messages SM32(YL,3) from N3 and SM12(YL,4) from N1, and it realizes that is no more receiving the clock signal from the master node N0, since both N3 and N1 are synchronized to it. Similarly, N3 processes the synchronization messages SM23(YL,3) from N2 and SM43(YL,4) from N4, and it realizes that is no more receiving the clock signal from the master node N0, since both N2 and N4 are synchronized to it.

By referring now to Figure 5d, N2 again processes SM32(YL,3), SM12(YL,4) and it selects (for instance according to the node identifiers comprised in each synchronization message) that the clock originating node replacing the master node N0 is e.g. N1. Therefore, N1 enters again in free-run mode, and it sends to N2 a synchronization message SM12(FR,0) informing N2 about this change. The node N2 then sends to N3 a synchronization message SM23(FR,1) informing N3 that N2 is synchronized to a free-run mode slave node. The node N3 replies to N2 with a synchronization message SM32(YFR,2) informing N2 that N3 is synchronized to N2, and it also sends to N4 a synchronization message SM34(FR,2) informing N4 that N3 is synchronized to a free-run mode slave node. Finally, N4 sends to N3 a synchronization message SM43(YFR,3) informing N3 that N3 is synchronized to it.

Therefore, advantageously, also in case of a fault affecting the master node of a network, synchronization between nodes can be recovered, since the master node can be (temporally) replaced by a slave node in free-run mode, providing its local clock signal to all the other slave nodes of the network. Advantageously, the present invention allows to automatically implement such a synchronization recovery, thanks to the use of synchronization messages and to the fact that each node autonomously selects its clock source node according to the above criteria.

In the network CN2 of Figures 5a-5d, the master node N0 has to synchronize an even number of slave nodes. The clock signal distribution mechanism is slightly different in case the number of slave nodes is odd, as it will be described in detail herein after by referring to Figures 6a-6d.

Figure 6a-6b show a network CN3 having six nodes N0, N1, N2, N3, N4, N5. The nodes are connected according to a ring structure. By way of example, it is assumed that the master node is N0. The nodes of CN3 exchange flows of TDM frames, which are not shown in the Figures 6a-6b for simplicity.

The normal operation of the network (see Figure 6a) will not be described in detail, since it is similar to the operation of the network CN2 shown in Figure 5a. It is simply remarked that N3 receives a synchronization message SM23(L,2) from N2 and a synchronization message SM43(L,2) from N4. Therefore, N3 can select its clock source node e.g. according to the node identifiers of nodes N2 and 4. For instance, it is assumed that N3 selects N4 as its clock source node. Therefore, N3 sends to N4 a synchronization message SM34(Y,3) informing N4 that N3 is synchronized to it, and it further sends to N2 a synchronization message SM32(L,3) informing N2 that N3 is now in locked mode. Even though N2 receives this synchronization message SM32(L,3) from N3, it keeps on being synchronized to N1, since its distance from the master node N0 is lower.

By referring to Figure 6b, it is now assumed that a fault F occurs at the master node N0. As N1 realizes that it is no more receiving any signal from N0, it processes the synchronization message SM21(YL,2) it is receiving from N2 and, by realizing that N2 is synchronized to it, it enters in free-run mode for avoiding loops. Then, N1 sends to N2 a synchronization message SM12(FR,0) informing N2 that N1 is now in free-run mode. Similarly, as N5 realizes that it is no more receiving any signal from N0, it processes the synchronization message S451(YL,2) it is receiving from N4 and, by realizing that N4 is synchronized to it, it enters in free-run mode for avoiding loops. Then, N5 sends to N4 a synchronization message SM54(FR,0) informing N4 that N5 is now in free-run mode.

Since N4 receive from N5 a synchronization message SM54(FR,0) and from N3 a synchronization message SM34(YL,3), since it can not select N3 as clock source node, it selects N5 as clock source node, and then it sends a synchronization message SM45(YFR,1) informing N5 that N4 is now synchronized to N5. On the contrary, since N2 receives from N3 the synchronization message SM32(L,3) and the synchronization message SM12(FR,0) from N1, it selects N3 as clock source node, since N3 apparently is still in locked mode. Then, N2 sends to N3 a synchronization message SM23(YL,4) informing N3 that N2 is synchronized to it, and it further sends to N1 a synchronization message SM21(L,4) that it still is in locked mode. In the meanwhile, N4 sends to N3 a synchronization message SM43(FR,1) informing N3 that N4 is synchronized to a free-run slave node.

By referring now to Figure 6c, when N3 receives from N4 the synchronization message SM43(FR,1), N3 realizes that the clock originating node is no more the master nod N0, but a slave node in free-run mode. Therefore, N3 replies to N4 with a synchronization message SM34(YFR,2) informing N4 that N3 will continue to be synchronized to it, and it further sends to N2 a synchronization message SM32(FR,2) informing N2 that N3 is still synchronized to a slave node in free-run mode.

By referring now to Figure 6d, when N2 receives from N3 the synchronization message SM32(FR,2), it realizes that the clock originating node of N3 is no more the master node N0, but it is a slave node in free-run mode. Therefore, N2 replies to N3 with a synchronization message SM23(YFR,3) informing N3 that N2 will continue being synchronized to it, and it further sends to N1 a synchronization message SM21(FR,3) informing N1 that N2 is synchronized to a slave node in free-run mode. N1 then gets synchronized to N1, and it replies to N1 with a synchronization message SM12(YFR,4) informing N1 about this.

## Claims

1. A method of synchronizing a plurality of nodes in a circuit emulation service network (CN), said plurality of nodes including a master node (N0), a first node (Na), a second node (Nb) and a third node (Nk), said first node (Na) and said second node (Nb) being adjacent to said third node (Nk), **characterized in that** said method comprises:
a) transmitting from said first node (Na) to said third node (Nk) a first synchronization message (SMa) comprising a first information (S/Oa, Da) indicative of an origin of a first clock signal received by said first node (Na), said first information (S/Oa, Da) indicating whether said first clock signal is generated by said master node (N0) or by a slave node in free-run mode;
b) transmitting from said second node (Nb) to said third node (Nk) a second synchronization message (SMb) comprising a second information (S/Ob, Db) indicative of an origin of a second clock signal received by said second node (Nb), said second information (S/Ob, Db) indicating whether said second clock signal is generated by said master node (N0) or by a slave node in free-run mode;
c) processing said first information (S/Oa, Da) and said second information (S/Ob, Db) at said third node (Nk);
d) selecting one of said first node (Na) and said second node (Nb) as clock source node for said third node (Nk) according to a result of said processing; and
e) synchronizing said third node (Nk) to said clock source node.

2. The method according to claim 1, **characterized in that**, in case said first information (S/Oa, Da) indicates that said first clock signal is generated by said master node and said second information (S/Ob, Db) indicates that said second clock signal is generated by said slave node in free-run mode, said step d) comprises selecting said first node (Na) as clock source node.

3. The method according to claim 1 or 2, **characterized in that** said first information (S/Oa, Da) further indicates whether said first clock signal is received by said first node (Na) from said third node (Nk) or from a node other than said third node (Nk), and said second information (S/Ob, Db) further indicates whether said second clock signal is received by said second node (Nb) from said third node (Nk) or from a node other than said third node (Nk).

4. The method according to claim 3, **characterized in that**, in case said first information (S/Oa, Da) indicates that said first clock signal is received by said first node (Na) from said third node (Nk) and said second information (S/Ob, Db) indicates that said second clock signal is received by said second node (Nb) from a node other than said third node (Nk), step d) comprises selecting said second node (Nb) as clock source node.

5. The method according to claim 3, **characterized in that**, in case said first information (S/Oa, Da) indicates that said first clock signal is received by said first node (Na) from said third node (Nk) and said second information (S/Ob, Db) indicates that said second clock signal is received by said second node (Nb) from said third node (Nk), said step d) comprises entering in free-run mode.

6. The method according to any of claims 3 to 5, **characterized in that** said first information (S/Oa, Da) further indicates a first distance between said first node (Na) and a node generating said first clock signal, and said second information (S/Ob, Db) indicates a second distance between said second node (Nb) and a node generating said second clock signal.

7. The method according to claim 6, **characterized in that**, in case said first information (S/Oa, Da) and said second information (S/Ob, Db) indicates that said first clock signal and said second clock signal are generated by a same node, and in case said first distance is lower than said second distance, said step d) comprises selecting said first node (Na) as clock source node.

8. The method according to claim 6 or 7, **characterized in that** said first information (S/Oa, Da) further comprises a first node identifier (Nida) and said second information (S/Ob, Db) further comprises a second node identifier (Nidb).

9. The method according to claim 8, **characterized in that**, in case said first information (S/Oa, Da) and said second information (S/Ob, Db) indicate that said first clock signal and said second clock signal are generated by a same node, and in case said first distance is equal to said second distance, said step d) comprises selecting one of said first node (Na) and said second node (Nb) as clock source node for said third node (Nk) according to said first node identifier (Nida) and said second node identifier (Nidb).

10. The method according to any of preceding claims, **characterized in that** said steps a) and b) are performed periodically.

11. The method according to any of preceding claims, **characterized in that** said first synchronization message (SMa) and said second synchronization message (SMb) are included in frames of aggregate data flows which are transmitted from said first node (Na) and from said second node (Nb), respectively, to said third node (Nk).

12. The method according to claim 11, **characterized in that** said first information (S/Oa, Da) and said second information (S/Ob, Db) are inserted in overheads of said frames.

13. A node (Nk) of a circuit emulation service network (CN), the network comprising a plurality of nodes, said plurality of nodes including a master node (N0), said node (Nk), a first node (Na) and a second node (Nb), said first node (Na) and said second node (Nb) being adjacent to said node (Nk), **characterized in that** it comprises:
a) a receiver for:
- receiving from said first node (Na) a first synchronization message (SMa) comprising a first information (S/Oa, Da) indicative of an origin of a first clock signal received by said first node (Na), said first information (S/Oa, Da) indicating whether said first clock signal is generated by said master node (N0) or by a slave node in free-run mode, and for
- receiving from said second node (Nb) a second synchronization message (SMb) comprising a second information (S/Ob, Db) indicative of an origin of a second clock signal received by said second node (Nb), said second information (S/Ob, Db) indicating whether said second clock signal is generated by said master node (N0) or by a slave node in free-run mode;
b) a processor for:
- processing said first information (S/Oa, Da) and said second information (S/Ob, Db); and
- selecting one of said first node (Na) and said second node (Nb) as clock source node according to a result of said processing; and
c) a clock recovery unit for synchronizing said node (Nk) to said clock source node.

14. The node (Nk) according to claim 13, **characterized in that** it further comprises a transmitter for transmitting a third synchronization message to said first node (Na) and a fourth synchronization message to said second node (Nb), said third and fourth synchronization messages comprising a third information indicative of an origin of a third clock signal received by said node (Nk).

15. The node (Nk) according to claim 13, **characterized in that**, in case said first information (S/Oa, Da) indicates that said first clock signal is generated by said master node and said second information (S/Ob, Db) indicates that said second clock signal is generated by said slave node in free-run mode, said processor is adapted to select said first node (Na) as clock source node.

16. The node (Nk) according to claim 13 or 15, **characterized in that** said receiver is further configured to receive said first synchronization message (SMa) comprising said first information (S/Oa, Da), whereby said first information (S/Oa, Da) further indicates whether said first clock signal is received by said first node (Na) from said third node (Nk) or from a node other than said third node (Nk), and to receive said second synchronization message (SMb) comprising said second information (S/Ob, Db), whereby said second information (S/Ob, Db) further indicates whether said second clock signal is received by said second node (Nb) from said third node (Nk) or from a node other than said third node (Nk).

17. The node (Nk) according to claim 16, **characterized in that**, in case said first information (S/Oa, Da) indicates that said first clock signal is received by said first node (Na) from said third node (Nk) and said second information (S/Ob, Db) indicates that said second clock signal is received by said second node (Nb) from a node other than said third node (Nk), said processor is adapted to select said second node (Nb) as clock source node.

18. The node (Nk) according to claim 16, **characterized in that**, in case said first information (S/Oa, Da) indicates that said first clock signal is received by said first node (Na) from said third node (Nk) and said second information (S/Ob, Db) indicates that said second clock signal is received by said second node (Nb) from said third node (Nk), said processor is adapted to command to said node (Nk) to enter in free-run mode.

19. The node (Nk) according to any of claims 16 to 18, **characterized in that** said receiver is further configured to receive said first synchronization message (SMa) comprising said first information (S/Oa, Da), whereby said first information (S/Oa, Da) further indicates a first distance between said first node (Na) and a node generating said first clock signal, and to receive said second synchronization message (SMb) comprising said second information (S/Ob, Db), whereby said second information (S/Ob, Db) indicates a second distance between said second node (Nb) and a node generating said second clock signal.

20. The node (Nk) according to claim 19, **characterized in that**, in case said first information (S/Oa, Da) and said second information (S/Ob, Db) indicates that said first clock signal and said second clock signal are generated by a same node, and in case said first distance is lower than said second distance, said processor is adapted to select said first node (Na) as clock source node.

21. The node (Nk) according to claim 19 or 20, **characterized in that** said receiver is further configured to receive said first synchronization message (SMa) comprising said first information (S/Oa, Da), whereby said first information (S/Oa, Da) further comprises a first node identifier (Nida), and to receive said second synchronization message (SMb) comprising said second information (S/Ob, Db), whereby said second information (S/Ob, Db) further comprises a second node identifier (Nidb).

22. The node (Nk) according to claim 21, **characterized in that**, in case said first information (S/Oa, Da) and said second information (S/Ob, Db) indicate that said first clock signal and said second clock signal are generated by a same node, and in case said first distance is equal to said second distance, said processor is adapted to select one of said first node (Na) and said second node (Nb) as clock source node for said third node (Nk) according to said first node identifier (Nida) and said second node identifier (Nidb).

23. A circuit emulation service network (CN) comprising a plurality of nodes, **characterized in that** said plurality of nodes includes at least a first node, a second node and a third node according to any of claims 12 to 22.

24. A computer program comprising computer program code means adapted for operating with respect to a node (Nk) of a circuit emulation service network (CN) comprising a plurality of nodes, said plurality of nodes including a master node (N0), said node (Nk), a first node (Na) and a second node (Nb), said first node (Na) and said second node (Nb) being adjacent to said node (Nk), **characterized in that** said computer program is adapted to:
- receive as a first input a first synchronization message (SMa) comprising a first information (S/Oa, Da) indicative of an origin of a first clock signal received by said first node (Na), said first information (S/Oa, Da) indicating whether said first clock signal is generated by said master node (N0) or by a slave node in free-run mode;
- receive as a second input a second synchronization message (SMb) comprising a second information (S/Ob, Db) indicative of an origin of a second clock signal received by said second node (Nb), said second information (S/Ob, Db) indicating whether said second clock signal is generated by said master node (N0) or by a slave node in free-run mode;
- processing said first information (S/Oa, Da) and said second information (S/Ob, Db); and
- selecting one of said first node (Na) and said second node (Nb) as clock source node for said node (Nk) according to a result of said processing.

25. A computer readable medium included in a node (Nk) of a circuit emulation service network (CN), **characterized in that** said computer readable medium has recorded thereon a computer program according to claim 24.

## Patentansprüche

1. Verfahren zum Synchronisieren einer Mehrzahl von Knoten in einem Schaltungsemulierungs-Dienstnetzwerk (CN), wobei die Mehrzahl von Knoten einen Master-Knoten (N0), einen ersten Knoten (Na), einen zweiten Knoten (Nb) und einen dritten Knoten (Nk) umfasst, wobei der besagte erste Knoten (Na) und der besagte zweite Knoten (Nb) mit dem besagten dritten Knoten (Nk) benachbart sind, **dadurch gekennzeichnet, dass** das besagte Verfahren umfasst:
a) Übertragen, von dem besagten ersten Knoten (Na) an den besagten dritten Knoten (Nk), einer ersten Synchronisationsnachricht (SMa) mit einer ersten Information (S/Oa, Da), welche einen Ursprung eines an dem besagten ersten Knoten (Na) empfangenen ersten Taktsignals angibt, wobei die besagte erste Information (S/Oa, Da) angibt, ob das besagte erste Taktsignal von dem besagten Master-Knoten (N0) oder von einem Sklave-Knoten im Free-Run-Modus erzeugt wurde;
b) Übertragen, von dem besagten zweiten Knoten (Nb) an den besagten dritten Knoten (Nk), einer zweiten Synchronisationsnachricht (SMb) mit einer zweiten Information (S/Ob, Db), welche einen Ursprung eines an dem besagten zweiten Knoten (Nb) empfangenen zweiten Taktsignals angibt, wobei die besagte zweite Information (S/Ob, Db) angibt, ob das besagte zweite Taktsignal von dem besagten Master-Knoten (N0) oder von einem Sklave-Knoten im Free-Run-Modus erzeugt wurde;
c) Verarbeiten der besagten ersten Information (S/Oa, Da) und der besagten zweiten Information (S/Ob, Db) an dem besagten dritten Knoten (Nk);
d) Auswählen, gemäß einem Ergebnis der besagten Verarbeitung, entweder des besagten ersten Knotens (Na) oder des besagten zweiten Knotens (Nb) als Taktursprungsknoten für den besagten dritten Knoten (Nk); und
e) Synchronisieren des besagten dritten Knotens (Nk) mit dem besagten Taktursprungsknoten.

2. Verfahren nach Anspruch 1, **dadurch gekennzeichnet, dass**, wenn die besagte erste Information (S/Oa, Da) angibt, dass das besagte erste Taktsignal von dem besagten Master-Knoten erzeugt wurde, und die besagte zweite Information (S/Ob, Db) angibt, dass das besagte zweite Taktsignal von dem besagten Sklave-Knoten im Free-Run-Modus erzeugt wurde, der besagte Schritt d) das Auswählen des besagten ersten Knotens (Na) als Taktursprungsknoten umfasst.

3. Verfahren nach Anspruch 1 oder 2, **dadurch gekennzeichnet, dass** die besagte erste Information (S/Oa, Da) weiterhin angibt, ob das besagte erste Taktsignal an dem besagten ersten Knoten (Na) von dem besagten dritten Knoten (Nk) oder von einem anderen Knoten als dem besagten dritten Knoten (Nk) empfangen wird, und die besagte zweite Information (S/Ob, Db) weiterhin angibt, ob das besagte zweite Taktsignal an dem besagten zweiten Knoten (Nb) von dem besagten dritten Knoten (Nk) oder von einem anderen Knoten als dem besagten dritten Knoten (Nk) empfangen wird.

4. Verfahren nach Anspruch 3, **dadurch gekennzeichnet, dass**, wenn die besagte erste Information (S/Oa, Da) angibt, dass das besagte erste Taktsignal an dem besagten ersten Knoten (Na) von dem besagten dritten Knoten (Nk) empfangen wird, und die besagte zweite Information (S/Ob, Db) angibt, dass das besagte zweite Taktsignal an dem besagten zweiten Knoten (Nb) von einem anderen Knoten als dem besagten dritten Knoten (Nk) empfangen wird, Schritt d) das Auswählen des besagten zweiten Knotens (Nb) Taktursprungsknoten umfasst.

5. Verfahren nach Anspruch 3, **dadurch gekennzeichnet, dass**, wenn die besagte erste Information (S/Oa, Da) angibt, dass das besagte erste Taktsignal an dem besagten ersten Knoten (Na) von dem besagten dritten Knoten (Nk) empfangen wird und die besagte zweite Information (S/Ob, Db) angibt, dass das besagte zweite Taktsignal an dem besagten zweiten Knoten (Nb) von dem besagten dritten Knoten (Nk) empfangen wird, der besagte Schritt d) das Schalten in den Free-Run-Modus umfasst.

6. Verfahren nach einem der Ansprüche 3 bis 5, **dadurch gekennzeichnet, dass** die besagte erste Information (S/Oa, Da) weiterhin eine erste Entfernung zwischen dem besagten ersten Knoten (Na) und einem Knoten, welcher das besagte erste Taktsignal erzeugt, angibt, und die besagte zweite Information (S/Ob, Db) eine zweite Entfernung zwischen dem besagten zweiten Knoten (Nb) und einem Knoten, welcher das besagte zweite Taktsignal erzeugt, angibt.

7. Verfahren nach Anspruch 6, **dadurch gekennzeichnet, dass**, wenn die besagte erste Information (S/Oa, Da) und die besagte zweite Information (S/Ob, Db) angeben, dass das besagte erste Taktsignal und das besagte zweite Taktsignal von einem selben Knoten erzeugt werden, und wenn die besagte erste Entfernung kleiner ist als die besagte zweite Entfernung, der besagte Schritt d) das Auswählen des besagten ersten Knotens (Na) als Taktursprungsknoten umfasst.

8. Verfahren nach Anspruch 6 oder 7, **dadurch gekennzeichnet, dass** die besagte erste Information (S/Oa, Da) weiterhin eine erste Knotenkennung (Nida) umfasst, und dass die besagte zweite Information (S/Ob, Db) weiterhin eine zweite Knotenkennung (Nidb) umfasst.

9. Verfahren nach Anspruch 8, **dadurch gekennzeichnet, dass**, wenn die besagte erste Information (S/Oa, Da) und die besagte zweite Information (S/Ob, Db) angeben, dass das besagte erste Taktsignal und das besagte zweite Taktsignal von einem selben Knoten erzeugt werden, und wenn die besagte erste Entfernung gleich der besagten zweiten Entfernung ist, der besagte Schritt d) das Auswählen entweder des besagten ersten Knotens (Na) oder des besagten zweiten Knotens (Nb) als Taktursprungsknoten für den besagten dritten Knoten (Nk) gemäß der besagten ersten Knotenkennung (Nida) und der besagten zweiten Knotenkennung (Nid b) umfasst.

10. Verfahren nach einem beliebigen der vorstehenden Ansprüche, wobei die besagten Schritte a) und b) periodisch ausgeführt werden.

11. Verfahren nach einem beliebigen der vorstehenden Ansprüche, **dadurch gekennzeichnet, dass** die besagte erste Synchronisationsnachricht (SMa) und die besagte zweite Synchronisationsnachricht (SMb) in Rahmen von aggregierten Datenflüssen, welche jeweils von dem besagten ersten Knoten (Na) und von dem besagten zweiten Knoten (Nb) an den besagten dritten Knoten (Nk) übertragen werden, enthalten sind.

12. Verfahren nach Anspruch 11, **dadurch gekennzeichnet, dass** die besagte erste Information (S/Oa. Da) und die besagte zweite Information (S/Ob, Db) in Overheads der besagten Rahmen eingefügt werden.

13. Knoten (Nk) eines Schaltungsemulierungs-Dienstnetzwerks (CN), wobei das Netzwerk eine Mehrzahl von Knoten umfasst, wobei die Mehrzahl von Knoten einen Master-Knoten (N0), den besagten Knoten (Nk), einen ersten Knoten (Na) und einen zweiten Knoten (Nb) umfasst, wobei der besagte erste Knoten (Na) und der besagte zweite Knoten (Nb) mit dem besagten Knoten (Nk) benachbart sind, **dadurch gekennzeichnet, dass** er umfasst:
a) Einen Empfänger zum:
- Empfangen, von dem besagten ersten Knoten (Na), einer ersten Synchronisationsnachricht (SMa) mit einer ersten Information (S/Oa, Da), welche einen Ursprung eines an dem besagten ersten Knoten (Na) empfangenen ersten Taktsignals angibt, wobei die besagte erste Information (S/Oa, Da) angibt, ob das besagte erste Taktsignal von dem besagten Master-Knoten (N0) oder von einem Sklave-Knoten im Free-Run-Modus erzeugt wurde, und zum
- Empfangen, von dem besagten zweiten Knoten (Nb), einer zweiten Synchronisationsnachricht (SMb) mit einer zweiten Information (S/Ob, Db), weiche einen Ursprung eines an dem besagten zweiten Knoten (Nb) empfangenen zweiten Taktsignals angibt, wobei die besagte zweite Information (S/Ob, Db) angibt, ob das besagte zweite Taktsignal von dem besagten Master-Knoten (N0) oder von einem Sklave-Knoten im Free-Run-Modus erzeugt wurde;
b) einen Prozessor zum:
- Verarbeiten der besagten ersten Information (S/Oa, Da) und der besagten zweiten Information (S/Ob, Db); und
- Auswählen, gemäß einem Ergebnis der besagten Verarbeitung, entweder des besagten ersten Knotens (Na) oder des besagten zweiten Knotens (Nb) als Taktursprungsknoten; und
c) eine Taktrückgewinnungseinheit zum Synchronisieren des besagten Knotens (Nk) mit dem besagten Taktursprungsknoten.

14. Knoten (Nk) nach Anspruch 13, **dadurch gekennzeichnet, dass** er weiterhin einen Sender zum Übertragen einer dritten Synchronisationsnachricht an den besagten ersten Knoten (Na) und einer vierten Synchronisationsnachricht an den besagten zweiten Knoten (Nb) umfasst, wobei die besagte dritte und die besagte vierte Synchronisationsnachricht eine dritte Information enthalten, welche einen Ursprung eines an dem besagten Knoten (Nk) empfangenen dritten Taktsignals angibt.

15. Knoten (Nk) nach Anspruch 13, **dadurch gekennzeichnet, dass**, wenn die besagte erste Information (S/Oa, Da) angibt, dass das besagte erste Taktsignal von dem besagten Master-Knoten erzeugt wird, und die besagte zweite Information (S/Ob, Db) angibt, dass das besagte zweite Taktsignal von dem besagten Sklave-Knoten im Free-Run-Modus Modus erzeugt wird, der besagte Prozessor dazu geeignet ist, den besagten ersten Knoten (Na) als Taktursprungsknoten auszuwählen.

16. Knoten (Nk) nach Anspruch 13 oder 15, **dadurch gekennzeichnet, dass** der besagte Empfänger weiterhin dafür konfiguriert ist, die besagte erste Synchronisationsnachricht (SMa), welche die besagte erste Information (S/Oa, Da) enthält, zu empfangen, wobei die besagte erste Information (S/Oa, Da) weiterhin angibt, ob das besagte erste Taktsignal an dem besagten ersten Knoten (Na) von dem besagten dritten Knoten (Nk) oder von einem anderen Knoten als dem besagten dritten Knoten (Nk) empfangen wird, und die besagte zweite Synchronisationsnachricht (SMb), welche die besagte zweite Information (S/Ob, Db) enthält, zu empfangen, wobei die besagte zweite Information (S/Ob, Db) weiterhin angibt, ob das besagte zweite Taktsignal an dem besagten zweiten Knoten (Nb) von dem besagten dritten Knoten (Nk) oder von einem anderen Knoten als dem besagten dritten Knoten (Nk) empfangen wird.

17. Knoten (Nk) nach Anspruch 16, **dadurch gekennzeichnet, dass**, wenn die besagte erste Information (6/0a, Da) angibt, dass das besagte erste Taktsignal an dem besagten ersten Knoten (Na) von dem besagten dritten Knoten (Nk) empfangen wird, und die besagte zweite Information (S/Ob, Db) angibt, dass das besagte zweite Taktsignal an dem besagten zweiten Knoten (Nb) von einem anderen Knoten als dem besagten dritten Knoten (Nk) empfangen wird, der besagte Prozessor dazu geeignet ist, den besagten zweiten Knoten (Nb) als Taktursprungsknoten auszuwählen.

18. Knoten (Nk) nach Anspruch 16, **dadurch gekennzeichnet, dass**, wenn die besagte erste Information (S/Oa, Da) angibt, dass das besagte erste Taktsignal an dem besagten ersten Knoten (Na) von dem besagten dritten Knoten (Nk) empfangen wird, und die besagte zweite Information (S/Ob, Db) angibt, dass das besagte zweite Taktsignal an dem besagten zweiten Knoten (Nb) von dem besagten dritten Knoten (Nk) empfangen wird, der besagte Prozessor dazu geeignet ist, den besagten Knoten anzuweisen, in den Free-Run-Modus zu schalten.

19. Knoten (Nk) nach einem beliebigen der Ansprüche 16 bis 18, **dadurch gekennzeichnet, dass** der besagte Empfänger weiterhin für den Empfang der besagten ersten Synchronisationsnachricht (SMa), welche die besagte erste Information (S/Oa, Da) enthält, wobei die besagte erste Information (S/Oa, Da) weiterhin eine erste Entfernung zwischen dem besagten ersten Knoten (Na) und einem Knoten, weicher das besagte erste Taktsignal erzeugt, angibt, und für den Empfang der besagten zweiten Synchronisationsnachricht (SMb), weiche die besagte zweite Information (S/Ob, Db) enthält, wobei die besagte zweite Information (S/Ob, Db) eine zweite Nachricht zwischen dem besagten zweiten Knoten (Nb) und einem Knoten, welcher das besagte zweite Taktsignal erzeugt, angibt, konfiguriert ist.

20. Knoten (Nk) nach Anspruch 19, **dadurch gekennzeichnet, dass**, wenn die besagte erste Information (5/0a, Da) und die besagte zweite Information (S/Ob, Db) angeben, dass das besagte erste Taktsignal und das besagte zweite Taktsignal von einem selben Knoten erzeugt werden, und wenn die besagte erste Entfernung kleiner ist als die besagte zweite Entfernung, der Prozessor dazu geeignet ist, den besagten ersten Knoten (Na) als Taktursprungsknoten auszuwählen.

21. Knoten (Nk) nach Anspruch 19 oder 20, **dadurch gekennzeichnet, dass** der besagte Empfänger weiterhin für den Empfang der besagten ersten Synchronisationsnachricht (SMa), welche die besagte erste Information (S/Oa. Da) enthält, wobei die besagte erste Information (S/Oa, Da) weiterhin eine erste Knotenkennung (Nida) enthält, und für den Empfang der besagten zweiten Synchronisationsnachricht (SMb), welche die besagte zweite Information (S/Ob, Db) enthält, wobei die besagte zweite Information (S/Ob, Db) weiterhin eine zweite Knotenkennung (Nidb) umfasst, konfiguriert ist.

22. Knoten (Nk) nach Anspruch 21, **dadurch gekennzeichnet, dass**, wenn die besagte erste Information (S/Oa, Da) und die besagte zweite Information (S/Ob, Db) angeben, dass das besagte erste Taktsignal und das besagte zweite Taktsignal von einem selben Knoten erzeugt wurden, und wenn die besagte erste Entfernung gleich der besagten zweiten Entfernung ist, der besagte Prozessor dazu geeignet ist, gemäß der besagten ersten Knotenkennung (Nida) und der besagten zweiten Knotenkennung (Nidb) entweder den besagten ersten Knoten (Na) oder den besagten zweiten Knoten (Nb) als Taktursprungsknoten für den besagten dritten Knoten (Nk) auszuwählen.

23. Schaltungsemulierungs-Dienstnetzwerk (CN) mit einer Mehrzahl von Knoten, **dadurch gekennzeichnet, dass** die besagte Mehrzahl von Knoten mindestens einen ersten Knoten, einen zweiten Knoten und einen dritten Knoten gemäß einem beliebigen der Ansprüche 12 bis 22 umfasst.

24. Computerprogramm, mit Computerprogrammcodemitteln, welche dazu geeignet sind, in Bezug auf einen Knoten (Nk) eines Schaltungsemulierungs-Dienstnetzwerks (CN) mit einer Mehrzahl von Knoten zu fungieren, wobei die besagte Mehrzahl von Knoten einen Master-Knoten (N0), den besagten Knoten (Nk), einen ersten Knoten (Na) und einen zweiten Knoten (Nb) umfasst, wobei der besagte erste Knoten (Na) und der besagte zweite Knoten (Nb) mit dem besagten Knoten (Nk) benachbart sind, **dadurch gekennzeichnet, dass** das besagte Computerprogramm dazu geeignet ist:
- als einen ersten Eingang eine erste Synchronisationsnachricht (SMa) zu empfangen, welche eine erste Information (S/Oa, Da) enthält, die einen Ursprung eines an dem besagten ersten Knoten (Na) empfangenen ersten Taktsignals angibt, wobei die besagte erste Information (S/Oa, Da) angibt, ob das besagte erste Taktsignal von dem besagten Master-Knoten (N0) oder von einem Sklave-Knoten im Free-Run-Modus erzeugt wurde;
- als einen zweiten Eingang eine zweite Synchronisationsnachricht (SMb) zu empfangen, welche eine zweite Information (S/Ob, Db) enthält, die einen Ursprung eines an dem besagten zweiten Knoten (Nb) empfangenen zweiten Taktsignals angibt, wobei die besagte zweite Information (S/Ob, Db) angibt, ob das besagte zweite Taktsignal von dem besagten Master-Knoten (N0) oder von einem Sklave-Knoten im Free-Run-Modus erzeugt wurde;
- die besagte erste Information (S/Oa, Da) und die besagte zweite Information (S/Ob, Db) zu verarbeiten; und
- gemäß einem Ergebnis der besagten Verarbeitung entweder den besagten ersten Knoten (Na) oder den besagten zweiten Knoten (Nb) als Taktursprungsknoten für den besagten Knoten (Nk) auszuwählen.

25. Computerlesbares Medium, welches in einem Knoten (Nk) eines Schaltungsemulierungs-Dienstnetzwerks (CN) enthalten ist, **dadurch gekennzeichnet, dass** auf dem besagten computerlesbaren Medium ein Computerprogramm gemäß Anspruch 24 gespeichert ist.

## Revendications

1. Procédé de synchronisation d'une pluralité de noeuds dans un réseau de service d'émulation de circuit (CN), ladite pluralité de noeuds comprenant un noeud maître (NO), un premier noeud (Na), un deuxième noeud (Nb) et un troisième noeud (Nk), ledit premier noeud (Na) et ledit deuxième noeud (Nb) étant adjacents audit troisième noeud (Nk), **caractérisé en ce que** ledit procédé comprend les étapes suivantes :
a) transmettre entre ledit premier noeud (Na) et ledit troisième noeud (Nk) un premier message de synchronisation (SMa) comprenant une première information (S/Oa, Da) indiquant une origine d'un premier signal d'horloge reçu par ledit premier noeud (Na), ladite première information (S/Oa, Da) indiquant si ledit premier signal d'horloge est généré par ledit noeud maître (N0) ou par un noeud esclave en mode libre ;
b) transmettre entre ledit deuxième noeud (Nb) et ledit troisième noeud (Nk) un deuxième message de synchronisation (SMb) comprenant une deuxième information (S/Ob, Db) indiquant une origine d'un deuxième signal d'horloge reçu par ledit deuxième noeud (Nb), ladite deuxième information (S/Ob, Db) indiquant si ledit deuxième signal d'horloge est généré par ledit noeud maître (N0) ou par un noeud esclave en mode libre ;
c) traiter ladite première information (S/Oa, Da) et ladite deuxième information (S/Ob, Db) au niveau dudit troisième noeud (Nk) ;
d) sélectionner un noeud parmi ledit premier noeud (Na) et ledit deuxième noeud (Nb) comme noeud source d'horloge pour ledit troisième noeud (Nk) conformément à un résultat dudit traitement ; et
e) synchroniser ledit troisième noeud (Nk) avec ledit noeud source d'horloge.

2. Procédé selon la revendication 1, **caractérisé en ce que**, au cas où ladite première information (S/Oa, Da) indique que ledit premier signal d'horloge est généré par ledit noeud maître et où ladite deuxième information (S/Ob, Db) indique que ledit deuxième signal d'horloge est généré par ledit noeud esclave en mode libre, ladite étape d) comprend la sélection dudit premier noeud (Na) comme noeud source d'horloge.

3. Procédé selon la revendication 1 ou 2, **caractérisé en ce que** ladite première information (S/Oa, Da) indique en outre si ledit premier signal d'horloge est reçu par ledit premier noeud (Na) à partir dudit troisième noeud (Nk) ou à partir d'un noeud autre que ledit troisième noeud (Nk), et **en ce que** ladite deuxième information (S/Ob, Db) indique en outre si ledit deuxième signal d'horloge est reçu par ledit deuxième noeud (Nb) à partir dudit troisième noeud (Nk) ou à partir d'un noeud autre que ledit troisième noeud (Nk).

4. Procédé selon la revendication 3, **caractérisé en ce que**, au cas où ladite première information (S/Oa, Da) indique que ledit premier signal d'horloge est reçu par ledit premier noeud (Na) à partir dudit troisième noeud (Nk) et où ladite deuxième information (S/Ob, Db) indique que ledit deuxième signal d'horloge est reçu par ledit deuxième noeud (Nb) à partir d'un noeud autre que ledit troisième noeud (Nk), l'étape d) comprend la sélection dudit deuxième noeud (Nb) comme noeud source d'horloge.

5. Procédé selon la revendication 3, **caractérisé en ce que**, au cas où ladite première information (S/Oa, Da) indique que ledit premier signal d'horloge est reçu par ledit premier noeud (Na) à partir dudit troisième noeud (Nk) et où ladite deuxième information (S/Ob, Db) indique que ledit deuxième signal d'horloge est reçu par ledit deuxième noeud (Nb) à partir dudit troisième noeud (Nk), ladite étape d) comprend le passage en mode libre.

6. Procédé selon l'une quelconque des revendications 3 à 5, **caractérisé en ce que** ladite première information (S/Oa, Da) indique en outre une première distance entre ledit premier noeud (Na) et un noeud générant ledit premier signal d'horloge, et **en ce que** ladite deuxième information (S/Ob, Db) indique une deuxième distance entre ledit deuxième noeud (Nb) et un noeud générant ledit deuxième signal d'horloge.

7. Procédé selon la revendication 6, **caractérisé en ce que**, au cas où ladite première information (S/Oa, Da) et ladite deuxième information (S/Ob, Db) indiquent que ledit premier signal d'horloge et ledit deuxième signal d'horloge sont générés par un même noeud, et au cas où ladite première distance est inférieure à ladite deuxième distance, ladite étape d) comprend la sélection dudit premier noeud (Na) comme noeud source d'horloge.

8. Procédé selon la revendication 6 ou 7, **caractérisé en ce que** ladite première information (S/Oa, Da) comprend en outre un premier identifiant de noeud (Nida) et ladite deuxième information (S/Ob, Db) comprend en outre un deuxième identifiant de noeud (Nidb).

9. Procédé selon la revendication 8, **caractérisé en ce que**, au cas où ladite première information (S/Oa, Da) et ladite deuxième information (S/Ob, Db) indiquent que ledit premier signal d'horloge et ledit deuxième signal d'horloge sont générés par un même noeud, et au cas où ladite première distance est égale à ladite deuxième distance, ladite étape d) comprend la sélection d'un noeud parmi ledit premier noeud (Na) et ledit deuxième noeud (Nb) comme noeud source d'horloge pour ledit troisième noeud (Nk) conformément audit premier identifiant de noeud (Nida) et audit deuxième identifiant de noeud (Nidb).

10. Procédé selon l'une quelconque des revendications précédentes, **caractérisé en ce que** lesdites étapes a) et b) sont exécutées périodiquement.

11. Procédé selon l'une quelconque des revendications précédentes, **caractérisé en ce que** ledit premier message de synchronisation (SMa) et ledit deuxième message de synchronisation (SMb) sont inclus dans des trames de flux de données groupées qui sont transmises à partir dudit premier noeud (Na) et à partir dudit deuxième noeud (Nb), respectivement, vers ledit troisième noeud (Nk).

12. Procédé selon la revendication 11, **caractérisé en ce que** ladite première information (S/Oa, Da) et ladite deuxième information (S/Ob, Db) sont insérées dans des surdébits desdites trames.

13. Noeud (Nk) d'un réseau de service d'émulation de circuit (CN), le réseau comprenant une pluralité de noeuds, ladite pluralité de noeuds comprenant un noeud maître (N0), ledit noeud (Nk), un premier noeud (Na) et un deuxième noeud (Nb), ledit premier noeud (Na) et ledit deuxième noeud (Nb) étant adjacents audit noeud (Nk), **caractérisé en ce qu'**il comprend :
a) un récepteur pour :
- recevoir à partir dudit premier noeud (Na) un premier message de synchronisation (SMa) comprenant une première information (S/Oa, Da) indiquant une origine d'un premier signal d'horloge reçu par ledit premier noeud (Na), ladite première information (S/Oa, Da) indiquant si ledit premier signal d'horloge est généré par ledit noeud maître (N0) ou par un noeud esclave en mode libre, et pour
- recevoir à partir dudit deuxième noeud (Nb) un deuxième message de synchronisation (SMb) comprenant une deuxième information (S/Ob, Db) indiquant une origine d'un deuxième signal d'horloge reçu par ledit deuxième noeud (Nb), ladite deuxième information (S/Ob, Db) indiquant si ledit deuxième signal d'horloge est généré par ledit noeud maître (N0) ou par un noeud esclave en mode libre ;
b) un processeur pour :
- traiter ladite première information (S/Oa, Da) et ladite deuxième information (S/Ob, Db) ; et
- sélectionner un noeud parmi ledit premier noeud (Na) et ledit deuxième noeud (Nb) comme noeud source d'horloge conformément à un résultat dudit traitement ; et
c) une unité de récupération d'horloge pour synchroniser ledit noeud (Nk) avec ledit noeud source d'horloge.

14. Noeud (Nk) selon la revendication 13, **caractérisé en ce qu'**il comprend en outre un transmetteur pour transmettre un troisième message de synchronisation audit premier noeud (Na) et un quatrième message de synchronisation audit deuxième noeud (Nb), lesdits troisième et quatrième messages de synchronisation comprenant une troisième information indiquant une origine d'un troisième signal d'horloge reçu par ledit noeud (Nk).

15. Noeud (Nk) selon la revendication 13, **caractérisé en ce que**, au cas où ladite première information (S/Oa, Da) indique que ledit premier signal d'horloge est généré par ledit noeud maître et où ladite deuxième information (S/Ob, Db) indique que ledit deuxième signal d'horloge est généré par ledit noeud esclave en mode libre, ledit processeur est adapté pour sélectionner ledit premier noeud (Na) comme noeud source d'horloge.

16. Noeud (Nk) selon la revendication 13 ou 15, **caractérisé en ce que** ledit récepteur est en outre configuré pour recevoir ledit premier message de synchronisation (SMa) comprenant ladite première information (S/Oa, Da), ladite première information (S/Oa, Da) indiquant en outre si ledit premier signal d'horloge est reçu par ledit premier noeud (Na) à partir dudit troisième noeud (Nk) ou à partir d'un noeud autre que ledit troisième noeud (Nk), et pour recevoir ledit deuxième message de synchronisation (SMb) comprenant ladite deuxième information (S/Ob, Db), ladite deuxième information (S/Ob, Db) indiquant en outre si ledit deuxième signal d'horloge est reçu par ledit deuxième noeud (Nb) à partir dudit troisième noeud (Nk) ou à partir d'un noeud autre que ledit troisième noeud (Nk).

17. Noeud (Nk) selon la revendication 16, **caractérisé en ce que**, au cas où ladite première information (S/Oa, Da) indique que ledit premier signal d'horloge est reçu par ledit premier noeud (Na) à partir dudit troisième noeud (Nk) et **en ce que** ladite deuxième information (S/Ob, Db) indique que ledit deuxième signal d'horloge est reçu par ledit deuxième noeud (Nb) à partir d'un noeud autre que ledit troisième noeud (Nk), ledit processeur est adapté pour sélectionner ledit deuxième noeud (Nb) comme noeud source d'horloge.

18. Noeud (Nk) selon la revendication 16, **caractérisé en ce que**, au cas où ladite première information (S/Oa, Da) indique que ledit premier signal d'horloge est reçu par ledit premier noeud (Na) à partir dudit troisième noeud (Nk) et **en ce que** ladite deuxième information (S/Ob, Db) indique que ledit deuxième signal d'horloge est reçu par ledit deuxième noeud (Nb) à partir dudit troisième noeud (Nk), ledit processeur est adapté pour commander audit noeud (Nk) de passer en mode libre.

19. Noeud (Nk) selon l'une quelconque des revendications 16 à 18, **caractérisé en ce que** ledit récepteur est en outre configuré pour recevoir ledit premier message de synchronisation (SMa) comprenant ladite première information (S/Oa, Da), ladite première information (S/Oa, Da) indiquant en outre une première distance entre ledit premier noeud (Na) et un noeud générant ledit premier signal d'horloge, et pour recevoir ledit deuxième message de synchronisation (SMb) comprenant ladite deuxième information (S/Ob, Db), ladite deuxième information (S/Ob, Db) indiquant une deuxième distance entre ledit deuxième noeud (Nb) et un noeud générant ledit deuxième signal d'horloge.

20. Noeud (Nk) selon la revendication 19, **caractérisé en ce que**, au cas où ladite première information (S/Oa, Da) et ladite deuxième information (S/Ob, Db) indiquent que ledit premier signal d'horloge et ledit deuxième signal d'horloge sont générés par un même noeud, et au cas où ladite première distance est inférieure à ladite deuxième distance, ledit processeur est adapté pour sélectionner ledit premier noeud (Na) comme noeud source d'horloge.

21. Noeud (Nk) selon la revendication 19 ou 20, **caractérisé en ce que** ledit récepteur est en outre configuré pour recevoir ledit premier message de synchronisation (SMa) comprenant ladite première information (S/Oa, Da), ladite première information (S/Oa, Da) comprenant en outre un premier identifiant de noeud (Nida), et pour recevoir ledit deuxième message de synchronisation (SMb) comprenant ladite deuxième information (S/Ob, Db), ladite deuxième information (S/Ob, Db) comprenant en outre un deuxième identifiant de noeud (Nidb).

22. Noeud (Nk) selon la revendication 21, **caractérisé en ce que**, au cas où ladite première information (S/Oa, Da) et ladite deuxième information (S/Ob, Db) indiquent que ledit premier signal d'horloge et ledit deuxième signal d'horloge sont générés par un même noeud, et au cas où ladite première distance est égale à ladite deuxième distance, ledit processeur est adapté pour sélectionner un noeud parmi ledit premier noeud (Na) et ledit deuxième noeud (Nb) comme noeud source d'horloge pour ledit troisième noeud (Nk) conformément audit premier identifiant de noeud (Nida) et audit deuxième identifiant de noeud(Nidb).

23. Réseau de service d'émulation de circuit (CN) comprenant une pluralité de noeuds, **caractérisé en ce que** ladite pluralité de noeuds comprend au moins un premier noeud, un deuxième noeud et un troisième noeud selon l'une quelconque des revendications 12 à 22.

24. Programme informatique comprenant des moyens de code de programme informatique adapté pour fonctionner par rapport à un noeud (Nk) d'un réseau de service d'émulation de circuit (CN) comprenant une pluralité de noeuds, ladite pluralité de noeuds comprenant un noeud maître (N0), ledit noeud (Nk), un premier noeud (Na) et un deuxième noeud (Nb), ledit premier noeud (Na) et ledit deuxième noeud (Nb) étant adjacents audit noeud (Nk), **caractérisé en ce que** ledit programme informatique est adapté pour :
- recevoir comme première entrée d'un premier message de synchronisation (SMa) comprenant une première information (S/Oa, Da) indiquant une origine d'un premier signal d'horloge reçu par ledit premier noeud (Na), ladite première information (S/Oa, Da) indiquant si ledit premier signal d'horloge est généré par ledit noeud maître (N0) ou par un noeud esclave en mode libre ;
- recevoir comme deuxième entrée d'un deuxième message de synchronisation (SMb) comprenant une deuxième information (S/Ob, Db) indiquant une origine d'un deuxième signal d'horloge reçu par ledit deuxième noeud (Nb), ladite deuxième information (S/Ob, Db) indiquant si ledit deuxième signal d'horloge est généré par ledit noeud maître (N0) ou par un noeud esclave en mode libre ;
- traiter ladite première information (S/Oa, Da) et ladite deuxième information (S/Ob, Db) ; et
- sélectionner un noeud parmi ledit premier noeud (Na) et ledit deuxième noeud (Nb) comme noeud source d'horloge pour ledit noeud (Nk) conformément à un résultat dudit traitement.

25. Support lisible par ordinateur inclus dans un noeud (Nk) d'un réseau de service d'émulation de circuit (CN), **caractérisé en ce que** ledit support lisible par ordinateur a enregistré sur celui-ci un programme informatique selon la revendication 24.
